# EUROPEAN PATENT APPLICATION

(11) **EP 4 729 186 A1**
(43) Date of publication of application: **22.04.2026**
(21) Application number: 25199429.9
(22) Date of filing: 01.09.2025
(51) Int. Cl.: B05C 9/04, B05C 9/12, B26D 3/28

(54) **COATING APPARATUS AND ELECTRODE MANUFACTURING APPARATUS COMPRISING COATING APPARATUS**

(30) Priority: 15.10.2024 KR 20240140080
(71) Applicant: SAMSUNG SDI CO., LTD., Yongin-si, Gyeonggi-do 17084 (KR)
(72) Inventor: HWANG, Yeyeong, 17084 Yongin-si (KR); JANG, Kyeongho, 17084 Yongin-si (KR); LEE, Hansol, 17084 Yongin-si (KR); AHN, Hyejin, 17084 Yongin-si (KR); PARK, Gwangwon, 17084 Yongin-si (KR); LEE, Seunghun, 17084 Yongin-si (KR)
(74) Representative: Marks & Clerk LLP

(57) **Abstract**

A coating apparatus may include a separating part configured to separate a composite substrate including a first substrate, a second substrate, and a central functional layer between a first surface of the first substrate and a first surface of the second substrate. The separating part may include a first slurry nozzle positioned at one side of the separating part and configured to apply a slurry onto the first surface of the first substrate, and a second slurry nozzle positioned at an other side of the separating part and configured to apply an other slurry onto the first surface of the second substrate. An electrode manufacturing apparatus may include the coating apparatus.

## Description

### BACKGROUND

### Field

The present disclosure relates to a coating apparatus and an electrode manufacturing apparatus including the coating apparatus. More specifically, the present disclosure relates to a coating apparatus for applying slurry onto a plurality of substrates together and an electrode manufacturing apparatus including the coating apparatus.

### Description of the Related Art

While primary batteries are not designed to be (re)charged, secondary (also known as rechargeable) batteries are designed to be discharged and recharged. Among secondary batteries, low-capacity secondary batteries are widely used in portable, small electronic devices, such as smart phones, feature phones, notebook computers, digital cameras, and camcorders, while high-capacity secondary batteries are widely used as power sources for driving motors in hybrid vehicles and electric vehicles, as well as for storing power (e.g., home and/or utility scale power storage). A secondary battery generally includes an electrode assembly including a positive electrode and a negative electrode, a case accommodating both electrodes, and electrode terminals connected to the electrode assembly.

Electrode manufacturing is one of the key operations in manufacturing secondary batteries. It is known that electrode manufacturing may involve efficiency and cost issues. For example, drying a slurry may be time consuming and cost consuming. In addition, it is necessary to reduce the thickness of a substrate of the electrode to increase the energy density of the secondary battery or improve the productivity of electrode manufacturing. However, as the substrate becomes thinner, durability of the battery reduces, which may result in poor driving stability.

The information disclosed in this Background section is for enhancement of understanding of the background of the present disclosure. The section may contain information that does not constitute related (or prior) art.

### SUMMARY

Embodiments of the present disclosure provide a coating apparatus and an electrode manufacturing apparatus including the coating apparatus.

Embodiments of the present disclosure provide a coating apparatus including a separating part configured to separate a first substrate and a second substrate in a composite substrate including the first substrate, the second substrate, and a central functional layer between a first surface of the first substrate and a first surface of the second substrate, a first slurry nozzle positioned at one side of the separating part and configured to apply a first slurry onto the first surface of the first substrate, and a second slurry nozzle positioned at another side of the separating part and configured to apply a second slurry onto the first surface of the second substrate.

Embodiments of the present disclosure provide a coating apparatus including a coating apparatus including a separating part configured to separate a composite substrate including a first substrate, a second substrate, and a central functional layer between a first surface of the first substrate and a first surface of the second substrate, wherein the separating part includes: a first slurry nozzle positioned at one side of the separating part and configured to apply a third slurry onto the first surface of the first substrate; and a second slurry nozzle positioned at an other side of the separating part and configured to apply a fourth slurry onto the first surface of the second substrate.

According to some embodiments of the present disclosure, the separating part may be configured to separate the first substrate and the second substrate , position a first partial functional layer, which is a portion of the central functional layer, on the first surface of the first substrate, and position a second partial functional layer, which is another portion of the central functional layer, on the first surface of the second substrate, the first slurry nozzle may be configured to apply the first slurry onto one surface of the first partial functional layer, and the second slurry nozzle may be configured to apply the second slurry onto one surface of the second partial functional layer.

**In** an embodiment, the separating part is configured to separate the central functional layer to form a first partial functional layer on the first surface of the first substrate a second partial functional layer on the first surface of the second substrate, wherein the first slurry nozzle is configured to apply the third slurry onto an exposed surface of the first partial functional layer, and wherein the second slurry nozzle is configured to apply the fourth slurry onto an exposed surface of the second partial functional layer.

According to some embodiments of the present disclosure, the separating part may be configured to split (or cut) the central functional layer to form the first partial functional layer and the second partial functional layer having a same thickness.

In an embodiment, the first partial functional layer and the second partial functional layer have substantially the same thickness.

According to some embodiments of the present disclosure, the coating apparatus may further include a buffer part positioned at one end of the separating part that comes into contact with the central functional layer.

In an embodiment, the coating apparatus further includes a buffer part positioned at an end of the separating part and configured to come into contact with the central functional layer.

According to some embodiments of the present disclosure, the first slurry nozzle may be positioned above the second slurry nozzle with respect to a direction of gravity, the first slurry nozzle may be configured to apply the first slurry in a direction opposite to the direction of gravity, and the second slurry nozzle may be configured to apply the second slurry in the direction of gravity.

In an embodiment, the first slurry nozzle is positioned above the second slurry nozzle with respect to a direction of gravity, the first slurry nozzle is configured to apply the third slurry in a direction opposite to the direction of gravity, and the second slurry nozzle is configured to apply the fourth slurry in the direction of gravity.

According to some embodiments of the present disclosure, an application speed of the first slurry by the first slurry nozzle may be different from an application speed of the second slurry by the second slurry nozzle.

In an embodiment, an application speed of the third slurry via the first slurry nozzle is different from an application speed of the fourth slurry via the second slurry nozzle.

According to some embodiments of the present disclosure, the coating apparatus may further include a slurry passage configured to supply slurry to the first slurry nozzle and the second slurry nozzle in parallel.

In an embodiment, the coating apparatus further includes a slurry passage configured to supply the third slurry to both the first slurry nozzle and the second slurry nozzle in an absence of the fourth slurry.

According to some embodiments of the present disclosure, the coating apparatus may further include a first slurry distribution passage configured to supply the first slurry to the first slurry nozzle, and a second slurry distribution passage configured to supply the second slurry to the second slurry nozzle.

In an embodiment, the coating apparatus further includes: a first slurry distribution passage configured to supply the third slurry to the first slurry nozzle; and a second slurry distribution passage configured to supply the fourth slurry to the second slurry nozzle.

Embodiments of the present disclosure provide an electrode manufacturing apparatus including a transfer part configured to transfer a composite substrate including a first substrate, a second substrate, and a central functional layer between a first surface of the first substrate and a first surface of the second substrate, and a coating apparatus including a separating part configured to separate the first substrate and the second substrate of the transferred composite substrate, a first slurry nozzle positioned at one side of the separating part and configured to apply a first slurry onto the first surface of the first substrate, and a second slurry nozzle positioned at another side of the separating part and configured to apply a second slurry onto the first surface of the second substrate.

Embodiments of the present disclosure provide an electrode manufacturing apparatus including: a transfer part configured to transfer a composite substrate including a first substrate, a second substrate, and a central functional layer between a first surface of the first substrate and a first surface of the second substrate; and a coating apparatus including a separating part configured to separate the composite substrate, wherein the separating part includes: a first slurry nozzle positioned at one side of the separating part and configured to apply a third slurry onto the first surface of the first substrate; and a second slurry nozzle positioned at an other side of the separating part and configured to apply a fourth slurry onto the first surface of the second substrate.

According to some embodiments of the present disclosure, the electrode manufacturing apparatus may further include a control unit configured to move the coating apparatus up or down with respect to a direction of gravity.

In an embodiment, the electrode manufacturing apparatus further includes a control unit configured to move the coating apparatus up or down with respect to a direction of gravity.

According to some embodiments of the present disclosure, the electrode manufacturing apparatus may further include a first slot die configured to apply a third slurry onto a second surface of the first substrate, and a second slot die configured to apply a fourth slurry onto a second surface of the second substrate.

In an embodiment, the electrode manufacturing apparatus further includes: a first slot die configured to apply a first slurry onto a second surface of the first substrate; and a second slot die configured to apply a second slurry onto a second surface of the second substrate.

According to some embodiments of the present disclosure, the electrode manufacturing apparatus may further include a first drying device configured to, before the first substrate and the second substrate are separated by the separating part, dry the composite substrate including the first substrate onto which the third slurry is applied and the second substrate onto which the fourth slurry is applied.

In an embodiment, the electrode manufacturing apparatus further includes a first drying device positioned before the separating part and configured to dry the composite substrate including the first substrate onto which the first slurry is applied and the second substrate onto which the second slurry is applied.

According to some embodiments of the present disclosure, the electrode manufacturing apparatus may further include a second drying device configured to dry the first substrate onto which the first slurry is applied and the second substrate onto which the second slurry is applied together.

In an embodiment, the electrode manufacturing apparatus further includes a second drying device configured to dry the first substrate onto which the third slurry is applied and configured to dry the second substrate onto which the fourth slurry is applied.

According to some embodiments of the present disclosure, the electrode manufacturing apparatus may further include a third drying device configured to dry the first substrate onto which the first slurry is applied, and a fourth drying device configured to dry the second substrate onto which the second slurry is applied.

In an embodiment, the electrode manufacturing apparatus further includes a second drying device configured to dry the first substrate onto which the third slurry is applied; and a third drying device configured to dry the second substrate onto which the fourth slurry is applied.

According to some embodiments of the present disclosure, the electrode manufacturing apparatus may further include a first air blower configured to supply air to the first surface of the first substrate onto which the first slurry is applied, and a second air blower configured to supply air to the first surface of the second substrate onto which the second slurry is applied.

In an embodiment, the electrode manufacturing apparatus further includes: a first air blower configured to supply air to the first surface of the first substrate onto which the third slurry is applied; and a second air blower configured to supply air to the first surface of the second substrate onto which the fourth slurry is applied.

Embodiments of the present disclosure provide a method of electrode manufacturing including transferring, by a transfer part, a composite substrate including a first substrate, a second substrate, and a central functional layer between a first surface of the first substrate and a first surface of the second substrate, separating, by a separating part included in a coating apparatus, the first substrate and the second substrate of the transferred composite substrate, applying, by a first slurry nozzle included in the coating apparatus and positioned at one side of the separating part, a first slurry onto the first surface of the first substrate, and applying, by a second slurry nozzle included in the coating apparatus and positioned at another side of the separating part, a second slurry onto the first surface of the second substrate.

Embodiments of the disclosure provide a method of manufacturing an electrode including: transferring a composite substrate including a first substrate, a second substrate, and a central functional layer between a first surface of the first substrate and a first surface of the second substrate; separating, via a coating apparatus, the composite substrate; applying a third slurry onto the first surface of the first substrate; and applying a fourth slurry onto the first surface of the second substrate.

According to some embodiments of the present disclosure, the electrode manufacturing method may further include applying, by a first slot die, a third slurry onto a second surface of the first substrate, and applying, by a second slot die, a fourth slurry onto a second surface of the second substrate.

In an embodiment, the method further includes: applying a first slurry onto a second surface of the first substrate; and applying a second slurry onto a second surface of the second substrate.

According to some embodiments of the present disclosure, the electrode manufacturing method may further include, before the first substrate and the second substrate are separated by the separating part, drying, by a first drying device, the composite substrate including the first substrate onto which the third slurry is applied and the second substrate onto which the fourth slurry is applied.

In an embodiment, the method further includes: prior to the separating, drying the composite substrate comprising the first substrate onto which the first slurry is applied; and prior to the separating, drying the second substrate onto which the second slurry is applied.

According to some embodiments of the present disclosure, the electrode manufacturing method may further include drying, by a second drying device, the first substrate onto which the first slurry is applied and the second substrate onto which the second slurry is applied together.

In an embodiment, the method further includes: drying both the first substrate onto which the third slurry is applied and the second substrate onto which the fourth slurry is applied.

According to some embodiments of the present disclosure, the electrode manufacturing method may further include drying, by a third drying device, the first substrate onto which the first slurry is applied, and drying, by a fourth drying device, the second substrate onto which the second slurry is applied.

In an embodiment, the method further includes: drying the first substrate onto which the third slurry is applied; and drying the second substrate onto which the fourth slurry is applied.

At least some of the above and other features of the invention are set out in the claims.

Any of the optional features discussed above in relation to one embodiment may, where appropriate, be applied to another embodiment.

Within the discussion above, where a third slurry is referred to, this may, where appropriate, be interchanged with the first slurry and vice versa. Likewise, where a fourth slurry is referred to, this may, where appropriate, be interchanged with the second slurry and vice versa. Where a second drying device is referred to, this may, where appropriate, be interchanged with the third drying device and vice versa. Where a third drying device is referred to, this may, where appropriate, be interchanged with the fourth drying device and vice versa.

According to various embodiments of the present disclosure, the coating apparatus is a single apparatus and may separate the first substrate and the second substrate and perform coating thereon together.

This may increase the space utilization of the process and improve productivity.

According to various embodiments of the present disclosure, after the mixture parts are positioned on both surfaces, the central functional layer may be split. The positioned mixture part may strengthen the rigidity of the first substrate and the second substrate that are separated from each other. Due to this, the first substrate and the second substrate are separated from each other, and thus, the first substrate and the second substrate may be prevented from being damaged.

According to various embodiments of the present disclosure, each substrate included in the composite substrate may be relatively thinner than in a case where only a single substrate is used. Because the electrode manufacturing apparatus manufactures electrodes using a thin substrate, electrodes with high energy density may be manufactured. In addition, because a composite substrate is used in an early stage of electrode manufacturing, the traveling stability of the initial composite substrate may be increased.

According to various embodiments of the present disclosure, the uniformity of quality of an electrode using a first substrate coated with a first slurry and a third slurry and a second substrate coated with a second slurry and a fourth slurry may be ensured.

According to various embodiments of the present disclosure, the electrode manufacturing apparatus may increase space utilization of the electrode manufacturing process.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 shows a portion of an electrode manufacturing apparatus according to embodiments of the present disclosure;
FIG. 2 shows a portion of a composite substrate according to embodiments of the present disclosure;
FIG. 3 shows a coating apparatus according to embodiments of the present disclosure;
FIG. 4 shows a coating apparatus according to embodiments of the present disclosure;
FIG. 5 shows a coating apparatus splitting a central functional layer according to embodiments of the present disclosure;
FIG. 6 shows an electrode manufacturing apparatus according to a comparative example;
FIG. 7 shows an electrode manufacturing apparatus according to embodiments of the present disclosure;
FIG. 8 shows an electrode manufacturing apparatus according to embodiments of the present disclosure; and
FIG. 9 is a flowchart showing an electrode manufacturing method according to embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

The embodiments described herein can be explained with reference to cross-sectional views and/or plain views as example views of the present disclosure. In the drawing, the thicknesses of films and regions can be exaggerated for effective description of technical contents. Thus, regions presented as an example in the drawings have general properties, and shapes of the exemplified areas can be used to illustrate a specific shape of a device region. Therefore, this should not be construed as limited to the scope of the present disclosure. Although the terms such as first, second, and third are used to describe various components in various embodiments herein, the components should not be limited to these terms. These terms are used only to distinguish one component from another component. Embodiments described and exemplified herein include complementary embodiments thereof. Like reference numerals refer to like elements throughout the specification.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

In some embodiments, a slurry may include a positive electrode active material (or a negative electrode active material), a conductive agent, a binder, an additive, etc., and may be applied onto a substrate to manufacture an electrode. In some embodiments, the substrate includes a metal thin-film substrate which may include aluminum foil, copper foil, nickel foil, a polymer composite substrate coated with metal, etc., but the present disclosure is not limited thereto.

In some embodiments, the positive electrode active material may include a compound (e.g., a lithiated intercalation compound) capable of reversibly intercalating and deintercalating lithium. In an embodiment, the positive electrode active material may include one or more complex oxides of lithium and a metal including cobalt, manganese, nickel, or a combination thereof. The negative electrode active material may include a material capable of reversibly intercalating/deintercalating lithium ions, lithium metal, an alloy of lithium metal, a material capable of doping and dedoping lithium, or a transition metal oxide. The conductive agent is configured to provide conductivity to the electrode and any material that does not contribute to chemical changes and is electronically conductive may be used in a battery. The binder is configured to help bonding of the active material and the conductive material to the current collector and help the slurry be uniformly applied onto the current collector. In an embodiment, the binder may include a non-aqueous binder, an aqueous binder, a dry binder, or any combination thereof.

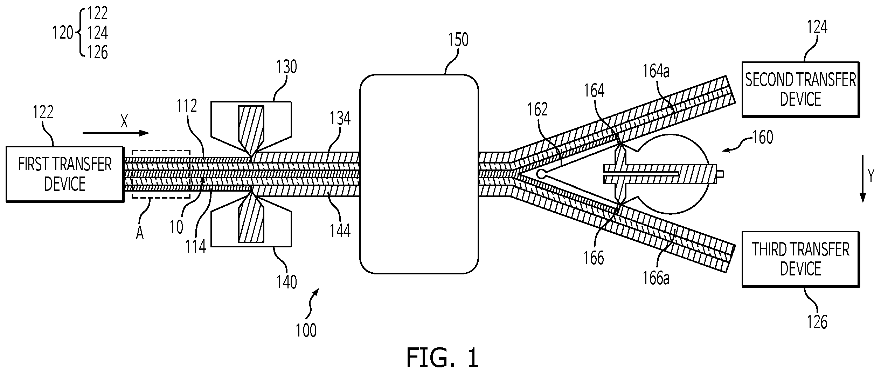

FIG. 1 shows a portion of an electrode manufacturing apparatus 100 according to embodiments of the present disclosure.

The electrode manufacturing apparatus 100 may include a transfer part 120 that transfers a composite substrate 10. The composite substrate 10 may include a first substrate, a second substrate, and a central functional layer between a first surface of the first substrate and a first surface of the second substrate.

The transfer part 120 may include a plurality of transfer devices 122, 124, and 126. In an embodiment, the transfer part 120 may include a roll-to-roll device. The first transfer device 122 may transfer the composite substrate 10 toward a separating part 162 of a coating apparatus 160. A portion of the composite substrate 10 separated by the separating part 162 may be transferred to the second transfer device 124, and the other portion of the separated composite substrate 10 may be transferred to the third transfer device 126.

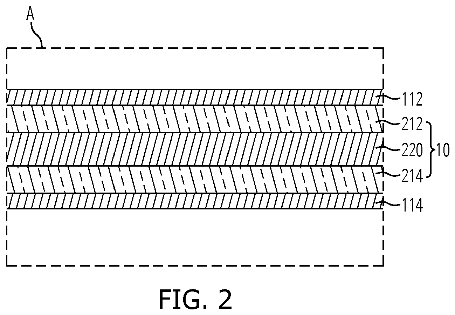

In an embodiment, the electrode manufacturing apparatus 100 may include a first slot die 130 and a second slot die 140. The first slot die 130 may apply a first slurry onto a second surface (not shown) of the first substrate included in the composite substrate 10. The second surface of the first substrate may be opposite to the first surface (not shown) of the first substrate on which the central functional layer is positioned. Because the first slot die 130 applies the first slurry, a first mixture part 134 may be formed on the first substrate. Before the first slurry is applied, a first functional layer 112 may be previously positioned on the second surface of the first substrate. Similarly, the second slot die 140 may apply the second slurry onto a second surface (not shown) of the second substrate included in the composite substrate 10. The second surface of the second substrate may be opposite to the first surface (not shown) of the second substrate on which the central functional layer is positioned. Because the second slot die 140 applies the second slurry, a second mixture part 144 may be formed on the second substrate. Before the second slurry is applied, a second functional layer 114 may be previously positioned on the second surface of the second substrate. The previously positioned functional layers 112 and 114 may join the mixture parts 134 and 144, respectively, and the substrate. The composite substrate 10 before the first slurry and/or the second slurry are applied is described in detail with reference to FIG. 2.

In an embodiment, the composite substrate 10 in which the first mixture part 134 and the second mixture part 144 are formed may be transferred to a first drying device 150. The first drying device 150 may dry a solvent or the like included in the first mixture part 134 and/or the second mixture part 144. Thereafter, the dried composite substrate 10 may be transferred toward the separating part 162 of the coating apparatus 160.

The electrode manufacturing apparatus 100 may include the coating apparatus 160 including the separating part 162, a first slurry nozzle 164, and a second slurry nozzle 166. The separating part 162 may separate the first substrate and the second substrates of the transferred composite substrate 10. In an embodiment, the separating part 162 may separate the first substrate and the second substrate by splitting the central functional layer included in the composite substrate 10. The first slurry nozzle 164 may apply a third slurry onto the first surface of the separated first substrate. The second slurry nozzle 166 may apply a fourth slurry onto the first surface of the separated second substrate.

In an embodiment, the separating part 162 may separate the first substrate and the second substrate and position a first partial functional layer, corresponding to a portion of the central functional layer, on the first surface of the first substrate. In some embodiments, the separating part 162 may position a second partial functional layer, corresponding to the other portion of the central functional layer, on the first surface of the second substrate. In an embodiment, the separating part 162 may split the central functional layer so that a portion of the divided central functional layer may be positioned on the first surface of the first substrate as the first partial functional layer and the other portion of the divided central functional layer may be positioned on the first surface of the second substrate as the second partial functional layer.

Thereafter, the first slurry nozzle 164 may apply the third slurry onto one surface of the first partial functional layer. The second slurry nozzle 166 may apply the fourth slurry onto one surface of the second partial functional layer. By applying the third slurry, a third mixture part 164a may be formed on the first partial functional layer, and by applying the fourth slurry, a fourth mixture part 166a may be formed on the second partial functional layer. The first partial functional layer may join the first substrate and the third mixture part 164a, and the second partial functional layer may join the second substrate and the fourth mixture part 166a.

In an embodiment, a first electrode plate including the first mixture part 134, the third mixture part 164a, and the first substrate may be transferred to the second drying device (not shown) by the second transfer device 124. In an embodiment, the second mixture part 144, the third mixture part 166a, and the second substrate may be transferred to the second drying device or the third drying device (not shown) by the third transfer device 126. The first electrode plate and the second electrode plate dried by the second drying device and/or the third drying device may be used as a positive electrode or a negative electrode. The positive electrode or the negative electrode may be included in an electrode assembly, and the electrode assembly may be accommodated in a case and manufactured as a secondary battery.

In an embodiment, the direction of entry into the coating apparatus 160 may be correspond to the transfer direction X of the composite substrate 10. The direction of entry into the coating apparatus 160 may be perpendicular to the direction Y of gravity. This way, the first substrate of the composite substrate 10 may be positioned above the second substrate.

The materials of the first to fourth slurries may be substantially the same as one another, and the materials of the first and second substrates may be substantially the same as each other. However, the present disclosure is not limited thereto, and the materials of the first to fourth slurries may be different from one another, and the materials of the first and second substrates may be different from each other. In an embodiment, the first slurry and the third slurry may be slurries including a positive electrode active material, and the first substrate may be a substrate for a positive electrode. In an embodiment, the second slurry and the fourth slurry may be slurries including a negative electrode active material, and the second substrate may be a substrate for a negative electrode.

Embodiments of the present disclosure provide the coating apparatus using the composite substrate including the first substrate, the second substrate, and the central functional layer. A plurality of devices may be required to coat each of the first and second substrates. In an embodiment, the coating apparatus is a single apparatus capable of separating the first substrate and the second substrate and performing coating thereon in a concerted manner. Advantageously, this may increase space utilization of the process and therefore improve productivity.

In some embodiments, after the composite substrates 10 are positioned on both surfaces (e.g., the second surface of the first substrate and the second surface of the second substrate), the central functional layer may be split. The positioned mixture part may strengthen the rigidity of the first substrate and the second substrate that are separated from each other. Accordingly, the first substrate and the second substrate are separated from each other, and thus, the first substrate and the second substrate damage can be prevented.

FIG. 2 shows a portion A of a composite substrate according to embodiments of the present disclosure.

FIG. 2 shows the composite substrate 10 before the mixture part is positioned. The composite substrate 10 may include a first substrate 212 and a second substrate 214. Each of the first substrate 212 and the second substrate 214 may include aluminum foil, copper foil, nickel foil, a polymer composite substrate coated with metal, etc.

The composite substrate 10 may include a central functional layer 220 between a first surface (corresponding to the lower interface) of the first substrate 212 and a first surface (corresponding to the upper interface) of the second substrate 214. A first functional layer 112 may be positioned on the second surface (corresponding to the upper interface) of the first substrate 212. A second functional layer 114 may be positioned on the second surface (corresponding to the lower interface) of the second substrate 214.

In an embodiment, the first functional layer 112, the second functional layer 114, and the central functional layer 220 may include a primer layer mixed with a polymer having adhesive properties. In an embodiment, the primer layer may include a mixture of a material having conductivity and a polymer having adhesive properties. In an embodiment, the first functional layer 112, the second functional layer 114, and the central functional layer 220 may include polyethylene terephthalate (PET), polypropylene (PP), polyamide (PA), polyvinyl alcohol (PVA), polyethylene (PE), polyvinylidene fluoride (PVDF), styrene butadiene rubber (SBR), Na⁺ or Li⁺ - carboxymethyl cellulose (CMC), polyacrylate (ACM), etc. The central functional layer 220 may adhere to the first substrate 212 and the second substrate 214 via the polymer having adhesive properties.

Each of the substrates 212 and 214 included in the composite substrate 10 may be relatively thinner than when only a single substrate is used. Because the electrode manufacturing apparatus involves using a relatively thin substrate, electrodes with high energy density may be manufactured. In addition, because the composite substrate is used in an early stage of electrode manufacturing, the initial composite substrate is robust in terms of mechanical stability.

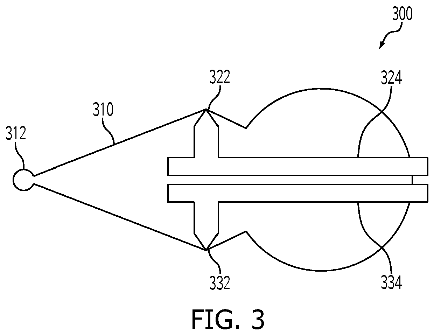

FIG. 3 shows a coating apparatus 300 according to embodiments of the present disclosure.

The coating apparatus 300 may include a separating part 310 that is capable of splitting the first substrate and the second substrate included in the composite substrate. In some embodiments, the coating apparatus 300 may include a first slurry nozzle 322 positioned at one side of the separating part 310 to apply a third slurry onto a first surface of the first substrate, and a second slurry nozzle 332 positioned at the other side of the separating part 310 to apply a fourth slurry onto a first surface of the second substrate.

In an embodiment, an end of the separating part 310 may come into contact with the central functional layer so as to separate the central functional layer. The end of the separating part 310 may include a splitting means for splitting the central functional layer, and the separation of the central functional layer may refer to splitting using the splitting means. The separating part 310 may include a buffer part 312 positioned at an end of the separating part. The buffer part 312 may be relatively thicker than the periphery of the end of the separating part 310. The buffer part 312 may prevent the end of the separating part 310 from being damaged and may buffer the separation of the first substrate and the second substrate.

In an embodiment, the first slurry nozzle 322 may supply the third slurry through a first slurry distribution passage 324. In addition, the second slurry nozzle 332 may supply the fourth slurry through a second slurry distribution passage 334. That is, the slurry distribution passage may be connected to each of the first slurry nozzle 322 and the second slurry nozzle 332.

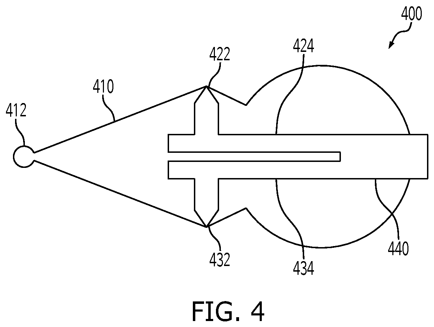

FIG. 4 shows a coating apparatus 400 according to embodiments of the present disclosure.

Referring to FIG. 4, the coating apparatus 400 may include a separating part 410 that is capable of splitting the first substrate and the second substrate included in the composite substrate. In some embodiments, the coating apparatus 400 may include a first slurry nozzle 422 positioned at one side of the separating part 410 to apply a third slurry onto a first surface of the first substrate, and a second slurry nozzle 432 positioned at the other side of the separating part 410 to apply a fourth slurry onto a first surface of the second substrate.

In an embodiment, an end of the separating part 410 may come into contact with the central functional layer so as to separate the central functional layer. The end of the separating part 410 may include a splitting means for splitting the central functional layer, and the separation of the central functional layer may refer to splitting using the splitting means. The separating part 410 may include a buffer part 412 positioned at an end of the separating part. The buffer part 412 may be relatively thicker than the periphery of the end of the separating part 410. The buffer part 412 may prevent the end of the separating part 410 from being damaged and may buffer the separation of the first substrate and the second substrate. In an embodiment, the first slurry nozzle 422 may supply the third slurry through a first slurry distribution passage 424. In addition, the second slurry nozzle 432 may supply the fourth slurry through a second slurry distribution passage 434. That is, the slurry distribution passage may be connected to each of the first slurry nozzle 422 and the second slurry nozzle 432.

In an embodiment, the first slurry distribution passage 424 and the second slurry distribution passage 434 may be connected to a single slurry passage 440. The slurry passage 440 may provide the slurry to the first slurry distribution passage 424 and the second slurry distribution passage 434.

In an embodiment, the slurry passage 440 may be connected to the first slurry nozzle 422 and the second slurry nozzle 432. The slurry passage 440 may supply the third slurry (and the fourth slurry combined as one) both to the first slurry nozzle 422 and the second slurry nozzle 432. In an embodiment, the slurry application speed of the first slurry nozzle 422 and the slurry application speed of the second slurry nozzle 432 may be different from each other. This way, the slurry application speed may be controlled by adjusting the specifications of the first slurry nozzle 422 and the second slurry nozzle 432 (e.g., the size of the slurry discharge port).

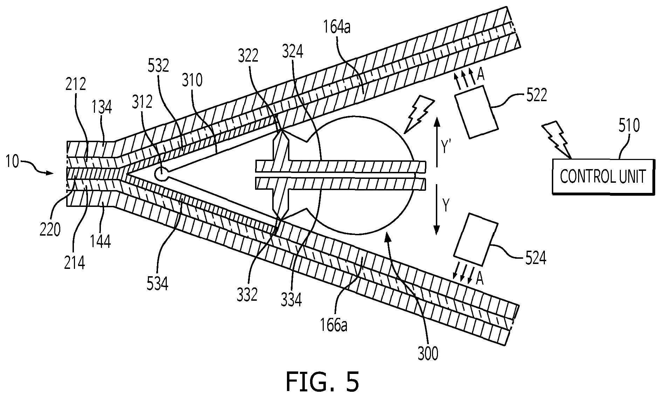

FIG. 5 shows a coating apparatus 300 splitting a central functional layer 220 according to embodiments of the present disclosure. The coating apparatus (see 300 of FIG. 3) splits the composite substrate (see 20 of FIG. 2) is mainly described with reference to FIG. 5.

In an embodiment, the composite substrate 10 may be transferred toward the separating part 310 of the coating apparatus 300. The central functional layer 220 of the composite substrate 10 may be separated, for example, split by the separating part 310. Accordingly, the separating part 310 may separate the first substrate 212 and the second substrate 214 and may position the first partial functional layer 532, which is a portion of the central functional layer 214, on the first surface (corresponding to the lower interface) of the first substrate 212. In an embodiment, the separating part 310 may position the second partial functional layer 534, which is the other portion of the central functional layer 214, on the first surface (corresponding to the upper interface) of the second substrate 214. The buffer part 312 positioned at an end of the separating part 310 may alleviate an impact that may occur when the central functional layer 220 is split.

In an embodiment, the separating part 310 may form the first partial functional layer 532 and the second partial functional layer 534 having the same (or substantially the same) thickness by separating (e.g., splitting) the central functional layer 214. In an embodiment, by separating the center with respect to the thickness direction of the central functional layer 214, the first partial functional layer 532 and the second partial functional layer 534 may have substantially the same thickness. The thickness of the first partial functional layer 532 and the thickness of the second partial functional layer 534 may be different from each other, but the present disclosure is not limited thereto.

In an embodiment, the electrode manufacturing apparatus may include a control unit 510. The control unit 510 may exist as part of a processor included in the electrode manufacturing apparatus, but the present disclosure is not limited thereto. The control unit 510 may move the coating apparatus 300 upwards or downwards with respect to the direction Y of gravity. By moving the coating apparatus 300 upwards or downwards, the separating part 310 included in the coating apparatus 300 may split the target point of the central functional layer 214.

In an embodiment, the first slurry nozzle 322 may be positioned above the second slurry nozzle 332 with respect to the direction Y of gravity. The first slurry nozzle 322 may apply the third slurry in a direction Y' opposite to the direction of gravity and the second slurry nozzle 332 may apply the fourth slurry in the direction Y of gravity.

In an embodiment, the application speed of the third slurry by the first slurry nozzle 322 may be different from the application speed of the fourth slurry by the second slurry nozzle 332. In an embodiment, the first slurry nozzle 322 may apply the third slurry in a direction Y' opposite to the direction of gravity and the second slurry nozzle 332 may apply the fourth slurry in the direction Y of gravity. In this case, the application speed of the third slurry by the first slurry nozzle 322 may be greater than the application speed of the fourth slurry by the second slurry nozzle 332. Accordingly, the slurry may be applied at a controlled speed in response to the slurry moving along gravity.

In an embodiment, the first slurry distribution passage 324 may allow the third slurry to be supplied by a first slurry pump. The second slurry distribution passage 334 may allow the fourth slurry to be supplied by a second slurry pump. The slurry supply speeds of the first slurry pump and the second slurry pump may be controlled by the control unit 510.

In an embodiment, by applying the third slurry, a third mixture part 164a may be positioned on the first partial functional layer 532, and by applying the fourth slurry, a fourth mixture part 166a may be positioned on the second partial functional layer 534. At this time, the first partial functional layer 532 may join the first substrate 212 and the third mixture part 164a, and the second partial functional layer 534 may join the second substrate 214 and the fourth mixture part 166a.

In an embodiment, the electrode manufacturing apparatus may include a first air blower 522 that supplies air onto the first surface of the first substrate on which the third mixture part 164a is positioned. In an embodiment, the electrode manufacturing apparatus may include a second air blower 524 that supplies air onto the first surface of the first substrate on which the fourth mixture part 166a is positioned. The third mixture part 164a and the fourth mixture part 166a may be in the form of an irregularly distributed slurry, and the air blower may spread the slurry by supplying air to the respective mixture part. This way, the mixture part can have the slurry is evenly distributed.

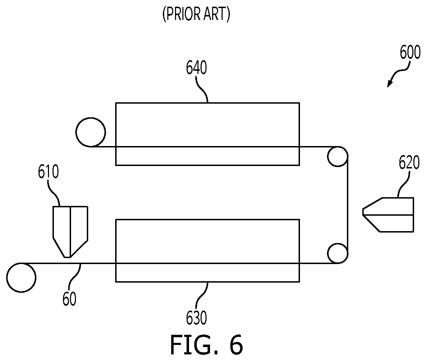

FIG. 6 shows an electrode manufacturing apparatus 600 according to a comparative example. The electrode manufacturing apparatus 600 described with reference to FIG. 6 may not include the coating apparatus (e.g., the coating apparatus 160 of FIG. 1, the coating apparatus 300 of FIG. 3, or the coating apparatus 400 of FIG. 4). In FIG. 6, the electrode manufacturing process of the electrode manufacturing apparatus 600 that does not include the coating apparatus is described.

In a comparative example, in the electrode manufacturing apparatus 600, the substrate 60 may be transferred by a transfer device. The substrate 60 may not include a composite substrate. A first surface of the substrate 60 may be applied with a first slurry by a first slot die 610. Thereafter, the substrate 60 onto which the first slurry has been applied may be dried by a first drying device 630. A second surface (opposite to the first surface) of the substrate 60 may be applied with a second slurry by a second slot die 620. Thereafter, the substrate 60 onto which the second slurry has been applied may be dried by a second drying device 640. The substrate 60 onto which the first slurry and the second slurry are applied and dried by the first drying device 630 and the second drying device 640 may be used as a positive electrode or a negative electrode.

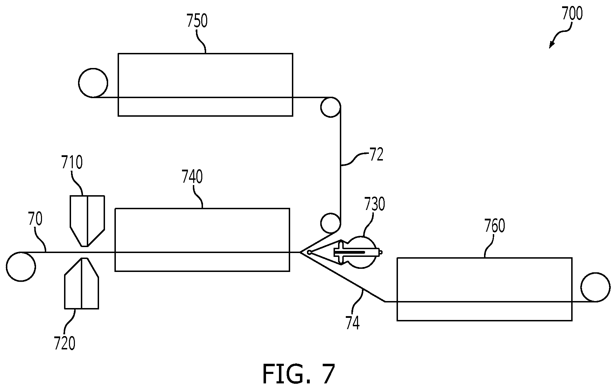

FIG. 7 shows an electrode manufacturing apparatus 700 according to embodiments of the present disclosure. The electrode manufacturing apparatus 700 may include a coating apparatus 730 substantially identical to the coating apparatus 160 of FIG. 1, the coating apparatus 300 of FIG. 3, or the coating apparatus 400 of FIG. 4.

In an embodiment, in the electrode manufacturing apparatus 700, a composite substrate 70 may be transferred by a transfer device. A first surface of the composite substrate 70 may be applied with a first slurry by a first slot die 710, and a second surface of the composite substrate 70 may be applied with a second slurry by a second slot die 720. Thereafter, the composite substrate 70 onto which the first slurry and the second slurry have been applied may be dried using a first drying device 740.

The composite substrate 70 dried by the first drying device 740 may be separated into a first substrate 72 and a second substrate 74 by the coating apparatus 730. In some embodiments, the coating apparatus 730 may apply a third slurry onto a first surface of the first substrate 72 and apply a fourth slurry on a first surface of the second substrate 74. Thereafter, the first substrate 72 onto which a third slurry is applied may be dried by a second drying device 750, and the second substrate 74 onto which a fourth slurry is applied may be dried by a third drying device 760. The first substrate 72 onto which the first slurry and the third slurry are applied and dried by the first drying device 740 and the second drying device 750 may be used as a positive electrode or a negative electrode. Similarly, the second substrate 74 onto which the second slurry and the fourth slurry are applied and dried by the first drying device 740 and the third drying device 760 may be used as a positive electrode or a negative electrode.

Referring to FIGS. 6 and 7, the electrode manufacturing apparatus 600 of FIG. 6 may require a substrate having a relatively longer length than that of the electrode manufacturing apparatus 700 of FIG. 7. The electrode manufacturing apparatus 700 of FIG. 7 may require a composite substrate 70 with a length that is equal to or less than about half of the required length in FIG. 6. When the electrode manufacturing speed is the same, the electrode manufacturing apparatus 700 of FIG. 7 is capable of manufacturing an electrode with at least twice the length of an electrode manufactured by the electrode manufacturing apparatus 600 of FIG. 6.

In addition, to manufacture electrodes with the same length within the same time, the electrode manufacturing apparatus 600 of FIG. 6 may require at least four slot dies and four drying devices. In contrast, the electrode manufacturing apparatus 700 of FIG. 7 may require only two slot dies, one coating apparatus 730, and three drying devices. Advantageously, the electrode manufacturing apparatus 700 according to embodiments of the present disclosure may increase space utilization of the electrode manufacturing process.

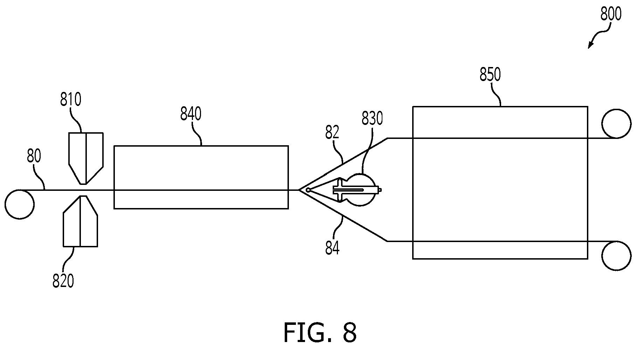

FIG. 8 shows an electrode manufacturing apparatus 800 according to embodiments of the present disclosure. The electrode manufacturing apparatus 800 may include a coating apparatus 830 substantially identical to the coating apparatus 160 of FIG. 1, the coating apparatus 300 of FIG. 3, or the coating apparatus 400 of FIG. 4.

In an embodiment, in the electrode manufacturing apparatus 800, a composite substrate 80 may be transferred by a transfer device. A first surface of the composite substrate 80 may be applied with a first slurry by a first slot die 810, and a second surface of the composite substrate 80 may be applied with a second slurry by a second slot die 820. Thereafter, the composite substrate 80 onto which the first slurry and the second slurry have been applied may be dried using a first drying device 840.

The composite substrate 80 dried by the first drying device 840 may be separated into a first substrate 82 and a second substrate 84 by the coating apparatus 830. In some embodiments, the coating apparatus 830 may apply a third slurry onto a first surface of the first substrate 82 and apply a fourth slurry on a first surface of the second substrate 84. Thereafter, the first substrate 82 onto which a third slurry is applied and the second substrate 84 onto which a fourth slurry is applied may be dried together using a second drying device 850. The first substrate 82 onto which the first slurry and the third slurry are applied and dried by the first drying device 840 and the second drying device 850 may be used as a positive electrode or a negative electrode. Similarly, the second substrate 84 onto which the second slurry and the fourth slurry are applied and dried by the first drying device 740 and the second drying device 850 may be used as a positive electrode or a negative electrode.

In an embodiment, the duration which the first substrate 82 and the second substrate 84 enter into the second drying device 850 may be the same or substantially the same to each other. Accordingly, uniform quality of the electrode using the first substrate 82 coated with the first slurry and the third slurry and the second substrate 84 coated with the second slurry and the fourth slurry can be ensured.

Referring to FIGS. 6 and 8, the electrode manufacturing apparatus 600 of FIG. 6 may require a having a relatively longer length that that of the electrode manufacturing apparatus 800 of FIG. 8. The electrode manufacturing apparatus 800 of FIG. 8 may require a composite substrate 80 with a length that is equal to or less than about half of the required length in FIG. 6. When the electrode manufacturing speed is the same, the electrode manufacturing apparatus 800 of FIG. 8 is capable of manufacturing an electrode with at least twice the length of an electrode manufactured by the electrode manufacturing apparatus 600 of FIG. 6.

In addition, to manufacture electrodes with the same length within the same time, the electrode manufacturing apparatus 600 of FIG. 6 may require at least four slot dies and four drying devices. In contrast, the electrode manufacturing apparatus 800 of FIG. 8 may require only two slot dies, one coating apparatus 730, and two drying devices. Advantageously, the electrode manufacturing apparatus 800 according to embodiments of the present disclosure may increase space utilization of the electrode manufacturing process.

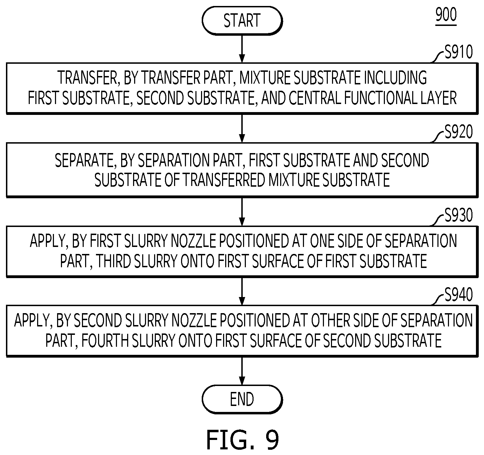

FIG. 9 is a flowchart showing an electrode manufacturing method 900 according to embodiments of the present disclosure. The electrode manufacturing method 900 may be performed by the electrode manufacturing apparatus according to embodiments of the present disclosure. In an embodiment, the electrode manufacturing apparatus may include the electrode manufacturing apparatus 100 described with reference to FIG. 1. For example, the electrode manufacturing apparatus may include at least one of the electrode manufacturing apparatus 700 described with reference to FIG. 7 or the electrode manufacturing apparatus 800 described with reference to FIG. 8.

The electrode manufacturing method may be initiated by transferring a composite substrate including a first substrate, a second substrate, and a central functional layer by the transfer part included in the electrode manufacturing apparatus (S910). The central functional layer may be provided between the first surface of the first substrate and the first surface of the second substrate.

In an embodiment, the separating part included in the coating apparatus may separate the first substrate and the second substrate of the transferred composite substrate (S920). The separating part may separate the first substrate and the second substrate. The separating part may position a first partial functional layer, which is a portion of the central functional layer, on the first surface of the first substrate, and a second partial functional layer, which is the other portion of the central functional layer, on the first surface of the second substrate. The first slurry nozzle may apply the third slurry onto one surface of the first partial functional layer. The second slurry nozzle may apply the fourth slurry onto one surface of the second partial functional layer. In an embodiment, the separating part may split the central functional layer to form the first partial functional layer and the second partial functional layer having substantially the same thickness.

In an embodiment, the electrode manufacturing apparatus may further include the buffer part positioned at an end of the separating part that comes into contact with the central functional layer.

In an embodiment, the first slurry nozzle may be positioned above the second slurry nozzle with respect to the direction of gravity, the first slurry nozzle may apply the first slurry in a direction opposite to the direction of gravity, and the second slurry nozzle may apply the second slurry in the direction of gravity. In some embodiments, the application speed of the first slurry by the first slurry nozzle may be different from the application speed of the second slurry by the second slurry nozzle.

In an embodiment, the coating apparatus may further include a slurry passage for supplying slurry to the first slurry nozzle and the second slurry nozzle together. In an embodiment, the coating apparatus may include a first slurry distribution passage for supplying the third slurry to the first slurry nozzle and a second slurry distribution passage for supplying the fourth slurry to the second slurry nozzle.

In an embodiment, the electrode manufacturing apparatus may further include a control unit for moving the coating apparatus upwards or downwards with respect to the direction of gravity.

In an embodiment, the first slurry nozzle positioned at one side of the separating part may apply the third slurry onto the first surface of the first substrate (S930).

In an embodiment, the second slurry nozzle positioned at the other side of the separating part may apply the fourth slurry onto the first surface of the second substrate (S940).

In an embodiment, a first air blower may supply air to the first surface of the first substrate onto which the third slurry is applied. In some embodiments, a second air blower may supply air to the first surface of the second substrate onto which the fourth slurry is applied.

In an embodiment, a first slot die may apply a third slurry onto the second surface of the first substrate. In an embodiment, a second slot die may apply a fourth slurry onto the second surface of the second substrate. Applying the third slurry may be performed before the first substrate and the second substrate are separated. Applying the fourth slurry may be performed before the first substrate and the second substrate are separated.

In an embodiment, before the first substrate and the second substrate are separated by the separating part, the first drying device may dry the composite substrate including the first substrate onto which the first slurry is applied and the second substrate onto which the second slurry is applied.

In an embodiment, the second drying device may dry the first substrate onto which the third slurry is applied and the second substrate onto which the fourth slurry is applied together.

In an embodiment, the second drying device may dry the first substrate onto which the third slurry is applied. The third drying device may dry the second substrate onto which the fourth slurry is applied.

The flowchart of FIG. 9 and the above description are only examples of the present disclosure, and the scope of the present disclosure is not limited to the flowchart of FIG. 9 and the above description. In an embodiment, one or more steps in the flowchart and the above description may be added/changed/deleted, the order of one or more steps may be changed, and one or more steps may be performed together.

Although the present disclosure has been described above with respect to embodiments thereof, the present disclosure is not limited thereto. Various modifications and variations can be made thereto by those skilled in the art within the scope of the present disclosure as defined by the claims.

### DESCRIPTION OF NOTABLE REFERENCE SYMBOLS

10: composite substrate
100: electrode manufacturing apparatus
112: first functional layer
114: second functional layer
120 : transfer part
122: first transfer device
124: second transfer device
126: third transfer device
130: first slot die
134: first mixture part
140: second slot die
144: second mixture part
150: drying device
160: cutting device
162: separating part
164: first slurry nozzle
164a: third mixture part
166: second slurry nozzle
166a: fourth mixture part
X: transfer direction
Y: direction of gravity
A: portion of composite substrate

## Claims

1. A coating apparatus comprising a separating part 162 configured to separate a composite substrate 10 comprising a first substrate 212, a second substrate 214, and a central functional layer 220 between a first surface of the first substrate 212 and a first surface of the second substrate 214,
wherein the separating part 162 comprises:
a first slurry nozzle 164 positioned at one side of the separating part 162 and configured to apply a third slurry 164a onto the first surface of the first substrate 212; and
a second slurry nozzle 166 positioned at an other side of the separating part 162 and configured to apply a fourth slurry 166a onto the first surface of the second substrate 214.

2. The coating apparatus as claimed in claim 1, wherein the separating part 162 is configured to separate the central functional layer 220 to form a first partial functional layer 532 on the first surface of the first substrate 212 a second partial functional layer 534 on the first surface of the second substrate 214, wherein the first slurry nozzle 322 is configured to apply the third slurry 164a onto an exposed surface of the first partial functional layer 532, and wherein the second slurry nozzle 332 is configured to apply the fourth slurry 166a onto an exposed surface of the second partial functional layer 534.

3. The coating apparatus as claimed in claim 2, wherein the first partial functional layer 532 and the second partial functional layer 534 have substantially the same thickness.

4. The coating apparatus as claimed in any preceding claim, further comprising a buffer part 312 412 positioned at an end of the separating part 310 410 and configured to come into contact with the central functional layer 220.

5. The coating apparatus as claimed in any preceding claim, wherein the first slurry nozzle 164 is positioned above the second slurry nozzle 166 with respect to a direction of gravity Y, the first slurry nozzle 164 is configured to apply the third slurry 164a in a direction opposite to the direction of gravity Y', and the second slurry nozzle 166 is configured to apply the fourth slurry 166a in the direction of gravity Y.

6. The coating apparatus as claimed in any preceding claim, wherein an application speed of the third slurry 164a via the first slurry nozzle 164 is different from an application speed of the fourth slurry 166b via the second slurry nozzle 166.

7. The coating apparatus as claimed in any preceding claim, further comprising a slurry passage 440 configured to supply the third slurry to both the first slurry nozzle 422 and the second slurry nozzle 432 in an absence of the fourth slurry.

8. The coating apparatus as claimed in any preceding claim, further comprising:
a first slurry distribution passage 324 configured to supply the third slurry 164a to the first slurry nozzle 322; and
a second slurry distribution passage 334 configured to supply the fourth slurry 166a to the second slurry nozzle 332.

9. An electrode manufacturing apparatus comprising:
a transfer part 122 124 126 configured to transfer a composite substrate 10 comprising a first substrate 212, a second substrate 214, and a central functional layer 220 between a first surface of the first substrate 212 and a first surface of the second substrate 214; and
a coating apparatus 160 according to any preceding claim.

10. The electrode manufacturing apparatus as claimed in claim 9, further comprising a control unit 510 configured to move the coating apparatus 300 up or down with respect to a direction of gravity Y.

11. The electrode manufacturing apparatus as claimed in claim 9 or claim 10, further comprising:
a first slot die 710 configured to apply a first slurry onto a second surface of the first substrate 72; and
a second slot die 720 configured to apply a second slurry onto a second surface of the second substrate 74.

12. The electrode manufacturing apparatus as claimed in any of claims 9 to 11, further comprising a second drying device 850 configured to dry the first substrate onto 82 which the third slurry is applied and configured to dry the second substrate 84 onto which the fourth slurry is applied.

13. The electrode manufacturing apparatus as claimed in any of claims 9 to 12, further comprising:
a second drying device 750 configured to dry the first substrate 72 onto which the third slurry is applied; and
a third drying device 760 configured to dry the second substrate 74 onto which the fourth slurry is applied.

14. The electrode manufacturing apparatus as claimed in any of claims 9 to 13, further comprising:
a first air blower 522 configured to supply air A to the first surface of the first substrate 212 onto which the third slurry 164a is applied; and
a second air blower 524 configured to supply air A to the first surface of the second substrate 214 onto which the fourth 166a slurry is applied.

15. A method for manufacturing an electrode, comprising:
transferring S910 a composite substrate 10 comprising a first substrate 212, a second substrate 214, and a central functional layer 220 between a first surface of the first substrate 212 and a first surface of the second substrate 214;
separating S920, via a coating apparatus 300, the composite substrate 10;
applying S930 a third slurry 164a onto the first surface of the first substrate 212; and
applying S940 a fourth slurry 166b onto the first surface of the second substrate 214.
